**Europäisches Patentamt**

**European Patent Office**

**Office européen des brevets**

(19)

(11) Veröffentlichungsnummer: **0 217 093**
**B1**

(12) # EUROPÄISCHE PATENTSCHRIFT

(45) Veröffentlichungstag der Patentschrift:
24.05.89

(51) Int. Cl.⁴: **A 61 C 1/08**

(21) Anmeldenummer: **86111400.7**

(22) Anmeldetag: **18.08.86**

(54) Zahnärztliches Handstück.

(30) Priorität: **26.08.85 DE 3530461**

(43) Veröffentlichungstag der Anmeldung:
**08.04.87 Patentblatt 87/15**

(45) Bekanntmachung des Hinweises auf die Patenterteilung:
**24.05.89 Patentblatt 89/21**

(84) Benannte Vertragsstaaten:
**AT CH DE FR GB IT LI SE**

(56) Entgegenhaltungen:
**EP-A- 0 029 860**
**DE-A- 2 756 011**

(73) Patentinhaber: **Siemens Aktiengesellschaft Berlin und München, Wittelsbacherplatz 2, D-8000 München 2 (DE)**

(72) Erfinder: **Schuss, Werner, Dipl.-Ing.(FH), von Erthalstrasse 44, D-6148 Heppenheim (DE)**
Erfinder: **Goisser, Siegfried, Dipl.-Ing.(FH), Ketteler-Strasse 36, D-6141 Einhausen (DE)**
Erfinder: **Weber, Walter, Darmstädter Strasse 278A, D-6140 Bensheim 3 (DE)**

**Beschreibung**

Die Erfindung bezieht sich auf ein zahnärztliches Handstück nach dem ersten Teil von Anspruch 1.

Ein derartiges Handstück ist aus der EP-A-0 029 862 bekannt, wobei das Kopfteil unmittelbar benachbart dem Kopfgehäuse eine Rasteinrichtung mit einer zylindrischen, durch beidseitiges Andrücken deformierbaren Außenhülse enthält, an der längs verlaufende, an ihren freien Enden mit Rastnasen versehene Stege befestigt sind, welche beim Aufstecken des Kopfteils auf das Griffteil in entsprechend ausgebildete Kerben oder Ausnehmungen im Griffteil eingreifen.

Die als Betätigungselement dienende Außenhülse nimmt eine relativ große Fläche in unmittelbarer Nähe des Kopfgehäuses in Anspruch, so daß es nur schwer möglich ist, Licht und gegebenenfalls andere Medien bereits am Ende des Griffteiles so austreten zu lassen, daß die Medien an der Präparationsstelle optimal genutzt werden können. Letzteres ist insbesondere für das Medium Licht von Bedeutung, weil man zur Vermeidung von Schlagschatten und Lichtverlusten das Lichtaustrittsende möglichst nahe an das Kopfgehäuse heranführen und dort relativ steil, d.h. annähernd parallel zur Werkzeugachse gerichtet, enden lassen möchte. Um dies bei dem bekannten Handstück zu erreichen, müßten die Medien in den relativ langen Halsteil des Kopfteils weitergeführt werden, was eine zusätzliche Medientrennstelle bedeuten würde, die an sich, und gerade bei Lichtübertragung, wegen der damit verbundenen Lichtverluste zu vermeiden ist.

Der im Anspruch 1 angegebenen Erfindung liegt die Aufgabe zugrunde, ein zahnärztliches Handstück der vorgenannten Gattung anzugeben, bei dem es möglich ist, insbesondere das Medium Licht unter weitgehender Vermeidung von Schlagschatten und unnötiger, relativ aufwendiger und Verluste mit sich bringender Trenn- bzw. Kupplungsstellen möglichst dicht an die Präparationsstelle heranführen zu können.

Durch die stirnseitig vorgesehenen schrägen Flächen zwischen Kopfteil und Griffteil ist es möglich, einerseits die Medien sehr nahe an das Kopfgehäuse heranzuführen, andererseits am anderen Ende des Kopfgehäuses genügend Platz zu schaffen, um dort z.B. Befestigungsmittel für den Kopfteilschaft vorsehen oder gegebenenfalls auch das Betätigungselement für die Rastvorrichtung anordnen zu können. Die schrägen Flächen erleichtern außerdem das Positionieren bzw. Ausrichten der Handstückteile beim Aufsetzen. Besonders erleichtert wird das Positionieren in Verbindung mit einem Führungsglied, z.B. einer Führungsnase, die axial oder radial vorstehend am einen Handstückteil vorgesehen ist und mit der schrägen Fläche des anderen Handstückteils derart zusammenwirkt, dass beim Zusammenfügen der Teile diese funktionsgerecht zueinander ausgerichtet werden. Das Führungsglied, das vorteilhafterweise zusammen mit einer entsprechend ausgebildeten Ausnehmung gleichsam eine Verdrehsicherung bildet, kann entweder an der Oberseite des Kopfteils oder an der Unterseite des Griffteils angeordnet sein.

Die schrägen Flächen können gewölbt oder in einer Ebene liegend ausgebildet in der vorgenannten Weise angeordnet sein. Vorteilhaft ist eine Anordnung unter einem Winkel von etwa 60° zur Achse des Kopfteilschaftes, wobei die schräge Fläche des Kopfteils das Kopfgehäuse tangieren oder leicht anschneiden kann. Ein Teil der griffteilseitigen Fläche wird vorteilhafterweise von einem Trägerteil gebildet, in dem die Leitungen für die Medien Luft, Wasser und Licht enden. Diese können entweder alle mit auf die Werkzeugspitze ausgerichtetem Ende dort ausmünden; vorteilhaft kann es aber auch sein, wenn der Lichtleiter zwei Leitungsenden aufweist, die in beidseitig des Trägerteils angeordneten, die Konturen des Halsteils fortsetzenden Wangen ausmünden und die Medien Luft und Wasser in das Kopfgehäuse hineinführen, wo sie in bekannter Weise dann über ein oder mehrere Austrittsöffnungen an der unteren Stirnseite des Kopfgehäuses austreten.

Weitere vorteilhafte Ausgestaltungen und Weiterbildungen der Erfindung sind den Unteransprüchen und der nachfolgenden Beschreibung eines Ausführungsbeispiels der Erfindung zu entnehmen.

Es zeigen:

Fig. 1 ein zahnärztliches Handstück in einer schaubildlichen Darstellung,

Fig. 2 das in Fig. 1 gezeigte Kopfteil in schaubildlicher Darstellung,

Figg. 3 und 4 die dem Griffteil zugeordneten, in bezug auf die Rastvorrichtung relevanten Teile in schaubildlicher Darstellung,

Fig. 5 ein mit dem Kopfteil nach Fig. 2 verbindbares Trägerteil für Medienleitungen in schaubildlicher Darstellung,

Fig. 6 das Trägerteil in der Draufsicht,

Fig. 7 das Kopfteil nach Fig. 2 in Seitenansicht teilweise im Schnitt,

Fig. 8 einen Teil des Kopfteils in der Draufsicht, teilweise im Schnitt.

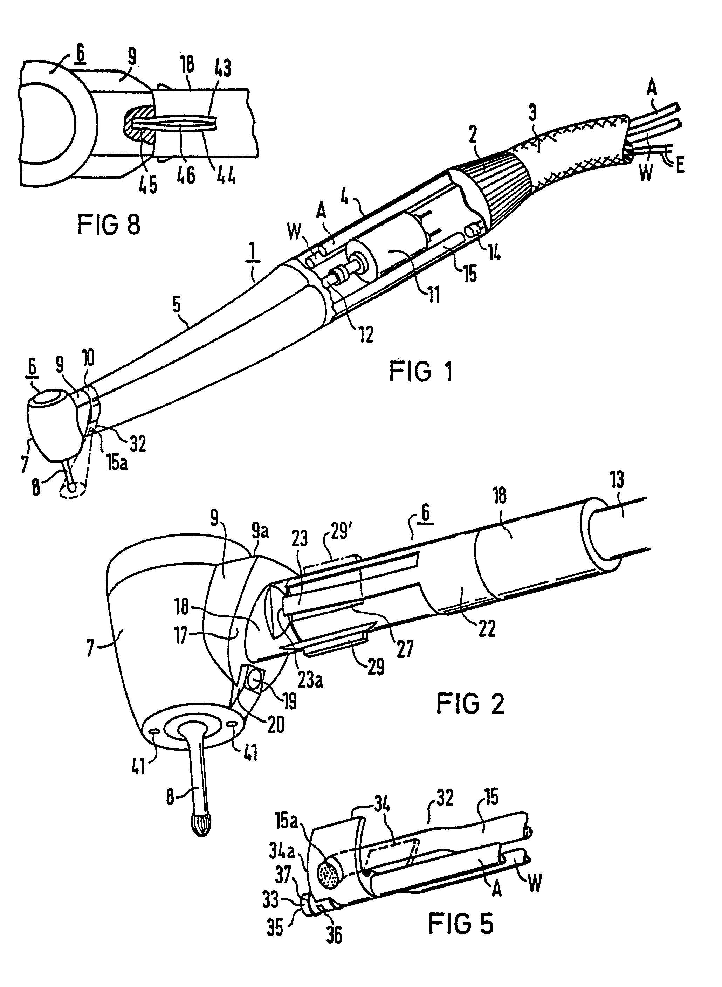

Die Fig. 1 zeigt in einer schaubildlichen Darstellung ein allgemein mit 1 bezeichnetes zahnärztliches Handstück, welches mittels Anschlußarmatur 2 an einen Versorgungsschlauch 3 angeschlossen ist, über welchen dem Handstück diverse Medien, wie Wasser (W), Luft (A) und elektrische Energie (E) zugeführt werden. An die Anschlußarmatur 2 schließen sich ein Antriebsteil 4, ein Griffteil 5 und ein Kopfteil 6 an. Das Kopfteil 6 enthält in bekannter Weise ein Kopfgehäuse 7 zur Aufnahme eines im vorliegenden Falle rotierenden Werkzeuges 8 sowie ein relativ kurzes Halsteil 9. Mit 10 ist ein Betätigungselement einer später noch näher erläuterten Rasteinrichtung zur Rastung des Kopfteils 6 gegenüber dem Griffteil 5 bezeichnet.

Das Antriebsteil 5 enthält einen in der Figur stark vereinfacht gezeichneten Antriebsmotor 11 (Elektro- oder Luftmotor), an dessen Antriebswelle sich mehrere, in üblicher Weise gekuppelte Triebwellenabschnitte 12, 13 (Fig. 2) anschließen, die in bekannter Weise das Werkzeug 8 antreiben. Das Antriebsteil 4 enthält ferner eine ebenfalls stark vereinfacht dargestellte Miniaturglühlampe 14, die, ebenso, wie der Motor 11, über die Energieleitungen E aus dem Versorgungsschlauch 3 mit Spannung versorgt wird. Der Lichtaustrittsstelle der Lampe 14 steht korrespondierend das Ende eines mit 15 bezeichneten Lichtleiters gegenüber, der, ebenso wie die Leitungen für Luft (A) und Wasser (W), innerhalb des Antriebs- und Griffteiles in geeigneter Weise verlegt ist. Der Lichtleiter 15 teilt sich im Bereich des Kopfteils auf in zwei Abschnitte, deren Enden 15a zu beiden Seiten des Kopfteils eine Lichtaustrittsstelle bilden, die so ausgerichtet ist, daß im Bereich der Werkzeugspitze ein ausreichend großes Lichtfeld erzeugt wird.

Aus Fig. 2, die das Kopfteil 6 im vom Griffteil 5 abgenommenen Zustand zeigt, ist ersichtlich, daß das sich an das Kopfgehäuse 7 anschließende Halsteil 9 eine schräg geneigte Fläche 17 aufweist, aus der einerseits ein Schaft 18, in dem der Triebwellenabschnitt 13 gelagert ist, und andererseits ein mit einer Bohrung 19 versehener Ansatzteil 20 austreten.

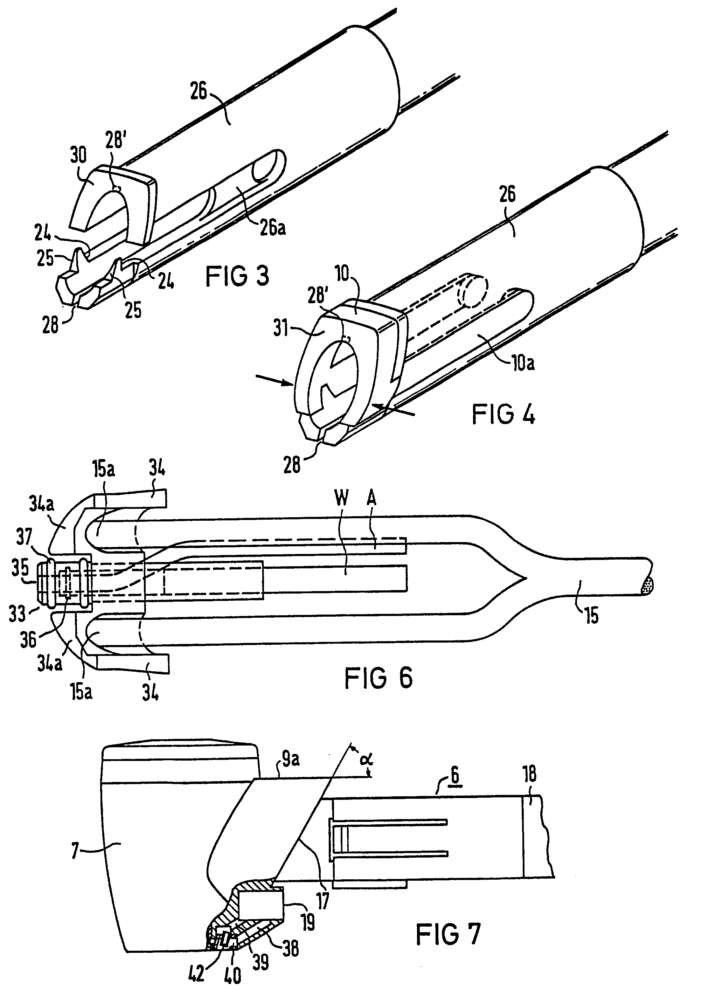

Die schräge Fläche 17 ist, wie in Fig. 7, die das Kopfteil in Seitenansicht zeigt, unter einem Winkel $\alpha$ von 60° zur Achse des Schaftes 18 zum unteren Ende des Kopfgehäuses 7 hin geneigt. Die schräge Fläche 17 ist dabei am Halsteil so weit zum Kopfgehäuse hin angesetzt, daß sie praktisch das Kopfgehäuse an der unteren Seite tangiert und im oberen, mit 9a bezeichneten Halsende genügend Platz verbleibt, um beispielsweise Befestigungsmittel (Schraube) für den Schaft 18 oder gegebenenfalls Betätigungsmittel für eine Rasteinrichtung unterbringen zu können. Im vorliegenden Ausführungsbeispiel ist dieses Betätigungselement jedoch Bestandteil des Griffteils 5.

Bevor auf die Medienübertragung näher eingegangen wird, sei kurz die Rasteinrichtung näher erläutert. Die Rasteinrichtung besteht aus einem aktiven Rastelement in Form einer am Schaft 18 des Kopfteils verdrehsicher befestigten Hülse 22, die achsparallel sich erstreckende federnde Lappen 23 aufweist. Die Enden 23a der Lappen 23 kommen im gerasteten Zustand an Anschlagflächen 24 von Rasthaken 25 zur Anlage, die eine im Griffteil 5 verdrehsicher eingesetzte Führungshülse 26 enthält (Fig. 3). Zum Entriegeln dient das aus Fig. 4 ersichtliche, dort zusammen mit der Führungshülse 26 dargestellte Betätigungselement 10, welches ⌐-förmig ausgebildet zwischen Kopfteil und Griffhülse klammerartig auf die Hülse 26 aufgesetzt und mit seitlichen Haltearmen 10a in einer entsprechenden Führungsnut 26a (Fig. 3) der Hülse 26 gegen axiales Abgleiten gesichert gehalten ist. Das Betätigungselement 10 ist federelastisch ausgebildet; durch seitliches, in Fig. 4 durch Pfeile angegebenes Andrücken können die im gerasteten Zustand mit ihren Enden 23a an den Anschlagflächen 24 anliegenden federnden Lappen 23 radial nach innen in eine Ausnehmung 27 am Schaft 18 ausweichen, wodurch die Rastverbindung außer Eingriff kommt. Das Kopfteil kann sodann aus der Führungshülse 26 bzw. dem Griffteil 5 axial abgezogen werden.

Die Führungshülse 26 enthält an ihrer Unterseite einen Längsschlitz 28, in den beim Aufschieben des Kopfteils 6 aus das Griffteil 5 ein Rastglied in Form einer Rastnase 29 als Verdrehsicherung eingreift (Fig. 2). Sie enthält ferner stirnseitig eine der Fläche 17 entsprechende schräge Anlagefläche 30, an der das Betätigungselement 10 anliegt. Das Betätigungselement 10 selbst enthält eine Fläche 31, die im gekuppelten Zustand der Handstückteile 5, 6 mit der Fläche 17 korrespondiert.

Besonders vorteilhaft ist es, Rastnase und Führungsschlitz nicht an der Unterseite, sondern an der Oberseite von Kopfteil und Griffteil anzuordnen, wie dies in den Figuren 2, 3 und 4 mit den Positionen 28', 29' angedeutet ist. Beim Aufschieben des Griffteils (mit Führungshülse) auf das Kopfeil lässt sich so eine genaue Positionierung, d.h. ein funktionsgerechtes Ausrichten der miteinander zu verbindenden Teile erzielen. Werden Kopfteil und Griffteil gegeneinander verdreht, also nicht funktionsgerecht zueinander ausgerichtet aufgesetzt, so gleitet beim axialen Zusammenfügen der Teile die schräge Stirnfläche 31 des Betätigungselements 10 unter Anlage an der Rastnase 29' dort so weit entlang, bis die Rastnase in den Schlitz 28' einrastet. Der gleiche Effekt lässt sich auch erzielen, wenn das Rastglied am Griffteil und der Schlitz – oder eine andere, dem Rastglied entsprechende Ausnehmung – am Kopfteil angeordnet sind. In diesem Falle sind aber dann die Teile an der Unterseite von Kopfteil und Griffteil anzuordnen. Das Rastglied kann, wie dargestellt, eine radial vorstehende Rastnase, aber auch ein achsparallel vorstehender Stift oder Zapfen sein. Letztere können vorteilhafterweise mit den die Medien führenden Leitungsenden, entsprechend dem nachstehend erwähnten Anschlußstutzen (Pos. 33), kombiniert sein.

Zwischen Kopfteil 6 und Griffteil 5 ist, unterhalb des Betätigungselements 10 gelegen (Fig. 1), ein Trägerteil 32 für die Medienleitungen angeordnet. Dieses Trägerteil ist in Fig. 5 schaubildlich und in Fig. 6 in der Draufsicht dargestellt.

Das Trägerteil 32 enthält einen zentralen Anschlußstutzen 33 und beidseitig davon abstehende Wangen 34 mit jeweils Öffnungen für den Austritt der Lichtleiterenden 15a. Die Wangen 34 sind so ausgebildet, daß sie einerseits die Außenkonturen des Halsteils 9 in diesem Bereich fortsetzen und andererseits im gekuppelten Zustand mit Stirnflächen 34a an der schrägen Fläche 17 anliegen und dort einen Anschlag bilden. Der Anschlußstutzen 33 greift in die Bohrung 19 (Fig. 2) des Kopfteils 6 ein und leitet die Medien Luft (A) und Wasser (W) in den unteren Teil des Kopfgehäuses (Fig. 7).

Aus den Figuren 5 und 6 ist ersichtlich, dass der Lichtleiter 15 sich in zwei Strangabschnitte aufteilt, deren Enden 15a zu beiden Seiten der Wangen 34 ausmünden. Die Luft- und Wasserleitungen (A, W) münden im Anschlußstutzen 33, und zwar einerseits an einer zentrischen Öffnung 35 und andererseits an einer Schlitzöffnung 36, die gegeneinander durch einen Dichtring 37 abgedichtet sind. Bei in die Bohrung 19 eingestecktem Anschlußstutzen 33 wird das eine Medium (A) über einen Kanal 38 in eine Ringkammer 40 geleitet, das andere Medium (W) wird über einen Kanal 39 und ein oder mehrere am Umfang der Ringkammer 40 und Austrittsöffnungen 41 (Fig. 2) korrespondierend verteilt angeordnete Düsen 42 dazugemischt, so daß an den Austrittsöffnungen 41 ein auf die Präparationsstelle gerichtetes Wasser/Luft-Gemisch (Spray) vorliegt.

Der Anschlußstutzen 33 mit der am freien Ende mündenden Öffnung 33 steht gegenüber den Stirnflächen 34a der seitlichen Wangen 34 des Trägerteils 32 axial etwas vor. Dies hat den Vorteil, daß bei nicht auf dem Griffteil (5) aufgestecktem Kopfteil (6) und versehentlicher Medienabgabe die Medien nicht in das Griffteil mit den darin befindlichen Triebwellen und deren Lager gelangen können, wodurch die Gefahr von Korrosion vermindert bzw. weitgehend ausgeschlossen wird.

Die in Fig. 2 mit 29 und 29' bezeichnete Rastnase kann vorteilhafterweise aus einem oder mehreren federnden Teilen gebildet sein, die quer zur Längsrichtung der Führungsnut 28 bzw. 28' wirkende Federkräfte erzeugen. Bei der in Fig. 8 dargestellten Ausführungsform, die das Kopfteil 6 von oben, also in der Draufsicht, zeigt, ist die Rastnase durch zwei hochkant angeordnete Blattfederelemente 43, 44 gebildet. Die einen Enden der Elemente 43, 44 ragen in eine Ausnehmung 45 des Halsteiles 9 hinein. Die Unterkante der Elemente sind in einer Längsnut 46 geführt. Im zusammengesteckten Zustand greifen die Elemente 43, 44 in die in Figuren 3 und 4 mit 28' bezeichnete Längsnut des Griffteils 5 bzw. der Führungshülse 26 ein. Durch die Federwirkung lassen sich Fertigungstoleranzen der Längsnut 28' ausgleichen, so daß stets ein guter Sitz zwischen Kopf- und Griffteil gegeben ist.

Anstelle der dargestellten beiden Blattfedern kann auch ein anders gestaltetes Federelement vorgesehen werden, beispielsweise eine gewellte, ebenfalls hochkant angeordnete Blattfeder oder eine durch eine längs geschlitze Hülse gebildete Rohrfeder.

## Patentansprüche

1. Zahnärztliches Handstück, enthaltend zwei mittels Rastvorrichtung (22 bis 25) axial miteinander verbindbare Handstückteile (5, 6), welche stirnseitig durch Querteilung gebildete, im verbundenen Zustand korrespondierend einander gegenüberliegende Flächen aufweisen und von einem an einen Versorgungsschlauch (3) anschließbaren Griffteil (5) und einem am freien Ende des Griffteils abnehmbar daran gehaltenen Kopfteil (6) gebildet sind, welches ein Kopfgehäuse (7) zur Aufnahme eines Werkzeuges (8) und ein sich zum Griffteil hin anschließendes Halsteil (9) mit Führungsschaft (18) zur Aufnahme einer Triebwelle (13) für den Antrieb des Werkzeuges (8) enthält, enthaltend ferner im Handstück-Inneren angeordnete Medienleitungen für Luft (A), Wasser (W) und Licht (15), von denen zumindest die für Licht (15) am kopfteilseitigen Ende des Griffteils (15) von diesem austritt, dadurch gekennzeichnet, daß die korrespondierend einander gegenüberstehenden Flächen (17, 31, 34a) von Griffteil (5) und Kopfteil (6) schräg zum Kopfgehäuse (7) hin geneigt sind und sich im wesentlichen bis zu dessen Ende erstrecken, aus welchem das Werkzeug (8) hervorragt.

2. Handstück nach Anspruch 1, dadurch gekennzeichnet, daß die Flächen (17, 31, 34a) unter einem spitzen Winkel ($\alpha$) von vorzugsweise 60° zur Achse des Kopfteilschaftes (18) geneigt angeordnet sind.

3. Handstück nach Anspruch 2, dadurch gekennzeichnet, daß die Flächen (17, 31, 34a) in einer Ebene liegen.

4. Handstück nach Anspruch 3, dadurch gekennzeichnet, daß die Flächen (17, 31, 34a) das Kopfgehäuse (7) tangieren.

5. Handstück nach einem der Ansprüche 1 bis 4, dadurch gekennzeichnet, daß zur Positionierung der Flächen (17, 31, 34a) und damit der miteinander zu verbindenden Handstückteile (5, 6) an der Oberseite des Kopfteilschaftes (18) oder an der Unterseite des Griffteilendes ein in eine Ausnehmung (28') des Griffteils (5) bzw. des Kopfteils (6) eingreifendes Führungsglied (29') angeordnet ist.

6. Handstück nach Anspruch 5, dadurch gekennzeichnet, daß das Führungsglied am griffteilseitigen Ende angeordnet ist und zumindest eine der Medienleitungsenden (33) beinhaltet.

7. Handstück nach einem der Ansprüche 1 bis 6, dadurch gekennzeichnet, daß in dem dem unteren Kopfgehäuseende zugewandten Abschnitt des Griffteils (5) die Fläche (34a) von einem Trägerteil (32) gebildet ist, in dem die Medienleitungen (W, A, 15) enden.

8. Handstück nach Anspruch 7, dadurch gekennzeichnet, daß die Medienleitungen (W, A, 15) in dem Trägerteil (32) mit auf die Werkzeugspitze gerichtetem Ende ausmünden.

9. Handstück nach Anspruch 7, dadurch gekennzeichnet, daß in dem Trägerteil (32) die Medienleitungen (W, A) für Luft und Wasser in einem zentralen Anschlußstutzen (33) enden, der in einen entsprechend ausgebildeten, aus der Fläche (17) des Kopfteils (6) austretenden Leitungskanal (19) einführbar ist, und daß das oder die Enden (15a) des Lichtleiters (15) in seitlichen, die äußere Kontur des Halsteils (9) fortsetzenden Wangen (34) des Trägerteils (32) münden.

10. Handstück nach Anspruch 9, dadurch gekennzeichnet, daß der Leitungskanal (19) im Kopfgehäuse (7) in einem zur Zentrierung und Verdrehsicherung dienenden Kopfgehäuseansatz (20) angeordnet ist.

11. Handstück nach Anspruch 9, dadurch gekennzeichnet, daß die Stirnflächen (34a) der beidseitig des Anschlußstutzens (33) angeordneten Wangen (34) im gekuppelten Zustand an der Fläche (17) des Kopfteils (6) anliegen und dort einen Anschlag bilden.

12. Handstück nach Anspruch 9, dadurch gekennzeichnet, daß die Stirnfläche einer Führungshülse (26) des Griffteils (5) einen Anschlag bildet.

13. Handstück nach einem der Ansprüche 9 bis 12, dadurch gekennzeichnet, daß in den Anschlußstutzen (33) zwei Medienleitungen (A, W) hineingeführt sind, die an axial hintereinanderliegenden und gegeneinander abgedichteten Öffnungen (35, 36) ausmünden, welche im gekuppelten Zustand der Handstückteile (5, 6) mit im Kopfgehäuseansatz (20) angeordneten Leitungskanälen (38, 39) verbunden sind, die wiederum mit an der Unterseite des Kopfgehäuses (7) angeordneten Austrittsöffnungen (41) Verbindung haben.

14. Handstück nach einem der Ansprüche 1 bis 13, dadurch gekennzeichnet, daß die Fläche oberhalb des Trägerteils (32) von der Stirnfläche (31)

eines ⊓-förmigen, zur Entriegelung der Rastvorrichtung (22 bis 25) dienenden Betätigungsgliedes (10) gebildet ist, welches an einer Führungshülse (26) des Griffteils (5) gehaltert ist.

15. Handstück nach Anspruch 4, dadurch gekennzeichnet, daß das freie Ende des Anschlußstutzens (33) gegenüber dem Trägerteil (32) axial vorsteht.

16. Handstück nach Anspruch 5, dadurch gekennzeichnet, daß das Führungsglied (29, 29') aus ein oder mehreren federnden Elementen (43, 44) mit quer zur Längsrichtung der Führungsnut (28, 28') wirkenden Federkräften gebildet ist.

17. Handstück nach Anspruch 16, dadurch gekennzeichnet, daß zwei hochkant stehende Blattfedern (43, 44) vorgesehen sind, deren eine Enden in einer Ausnehmung (45) des Kopfteils (6) befestigt und deren längsseitige Unterkanten in einer Führungsnut (46) des Führungsschaftes (18) gefaßt sind.

## Claims

1. A dental handpiece comprising two handpiece parts (5 to 6) which are axially connectable to one another by means of a locking device (22 to 25), have surfaces at the front ends that are formed by transverse division and are correspondingly opposed to one another when connected, and comprise a handle part (5) which can be attached to a supply hose (3) and a head part (6) detachably mounted thereon at the free end of the handle part (5) and including a head housing (7) to receive a tool (8) and a neck part (9) next to the handle part and having a guide shaft (18) to receive a drive shaft (13) to drive the tool (8), said handpiece also comprising within it media lines for air (A), water (W) and light (15), of which at least the one for light (15) emerges from the head part end of the handle part (15), characterised in that the corresponding opposed surfaces (17, 31, 34a) of the handle part (5) and the head part (6) are inclined diagonally towards the head housing (7) and extend substantially to the end thereof from which the tool (8) projects.

2. A handpiece according to claim 1, characterised in that the surfaces (17, 31, 34a) are inclined at an acute angle (α) of preferably 60° to the axis of the head part shaft (18).

3. A handpiece according to claim 2, characterised in that the surfaces (17, 31, 34a) lie in one plane.

4. A handpiece according to claim 3, characterised in that the surfaces (17, 31, 34a) are tangential to the head housing (7).

5. A handpiece according to any one of claims 1 to 4, characterised in that in order to position the surfaces (17, 31, 34a) and thereby the handpiece parts (5, 6) to be connected to one another, a guide member (29') is arranged on the upper side of the head part shaft (18) or on the lower side of the handle part end engaging in a recess (28') in the handle part (5) or in the head part (6) respectively.

6. A handpiece according to claim 5, characterised in that the guide member is arranged at the handle part and includes at least one of the media line ends (33).

7. A handpiece according to any one of claims 1 to 6, characterised in that the section of the handle part (5) facing the lower end of the head housing the surface (34a) is formed by a supporting part (32) in which the media lines (W, A, 15) terminate.

8. A handpiece according to claim 7, characterised in that the media lines (W, A, 15) open in the supporting part (32) with the ends directed towards the tip of the tool.

9. A handpiece according to claim 7, characterised in that in the supporting part (32) the media lines (W, A) for air and water terminate in a central connection piece (33) which can be inserted into a correspondingly formed duct (19) issuing from the surface (17) of the head part (6), and that the end or ends (15a) of the light conductor (15) open into side walls (34) of the supporting part (32) which continue the outer contour of the neck part (9).

10. A handpiece according to claim 9, characterised in that the duct (19) in the head housing (7) is arranged in a head housing projection (20) for centering and securing against torsion.

11. A handpiece according to claim 9, characterised in that the front ends (34a) of the side walls (34) arranged on both sides of the connection piece (33) butt against the face (17) of the head part (6) when in the coupled state and form a stop there.

12. A handpiece according to claim 9, characterised in that the front end of a guide sleeve (26) of the handle part (5) forms a stop.

13. A handpiece according to any one of claims 9 to 12, characterised in that guided into the connection piece (33) are two media lines (A, W) which lead into openings (35, 36) sealed from one another and lying axially one behind the other, which, when the parts (5, 6) of the handpiece are coupled, are connected to service passages (38, 39) arranged in the head housing attachment (20), which in turn are connected to oulet openings (41) arranged on the underside of the head housing (7).

14. A handpiece according to any one of claims 1 to 13, characterised in that the surface above the supporting part (32) is formed by the front face (31) of a ⊓-shaped operating member (10) which serves to unlock the locking device (22 to 25) and is secured to a guide sleeve (26) of the handle part (5).

15. A handpiece according to claim 4, characterised in that the free end of the connection piece (33) projects axially relative to the supporting part (32).

16. A handpiece according to claim 5, characterised in that the guide member (29, 29') is formed of one or more resilient elements (43, 44) with elastic forces acting transverse to the longitudinal direction of the guide groove (28, 28').

17. A handpiece according to claim 16, characterised in that two upright leaf springs (43, 44) are provided whose one end is secured in a recess (45) in the head part (6) and whose longitudinal undersides are grasped in a guide groove (46) of the guide shaft (18).

**Revendications**

1. Pièce à main de dentisterie, comportant deux parties (5, 6), qui peuvent être reliées axialement entre elles au moyen d'un dispositif d'encliquetage (22 à 25), possèdent des surfaces délimitées par une subdivision transversale sur le côté frontal et situées de façon correspondante en vis-à-vis, lorsque les deux parties de la pièce à main sont reliées entre elles, et sont formées par une partie de préhension (5) pouvant être raccordée à un tuyau d'alimentation (3), et par une partie de tête (6) maintenue, de façon amovible, sur l'extrémité libre de la partie de préhension et contenant un boîtier de tête (7), servant à loger un outil (8), et une partie en forme de col (9) se raccordant à la partie de préhension et comportant un tube de guidage (18) destiné à loger un arbre d'entraînement (13) servant à entraîner l'outil (8), la pièce à main comportant en outre des conduits véhiculant des milieux, disposés en son intérieur et prévus pour l'air (A), l'eau (W) et la lumière (15), et parmi lesquels au moins le conduit pour la lumière (15) ressort hors de la partie de préhension (5), au niveau de l'extrémité de cette dernière, tournée vers la partie de tête, caractérisée par le fait que les surfaces (17, 31, 34a), qui sont situées de façon correspondante en vis--vis les unes des autres, de la partie de préhension (5) et de la partie de tête (6), sont inclinées obliquement par rapport au boîtier de tête (7) et s'étendent sensiblement jusqu'à l'extrémité de ce boîtier, hors de laquelle l'outil (8) fait saillie.

2. Pièce à main suivant la revendication 1, caractérisée par le fait que les surfaces (17, 31, 34a) sont inclinées d'un angle aigu ($\alpha$) égal de préférence à 60° par rapport à l'axe du tube (18) de la partie de tête.

3. Pièce à main suivant la revendication 2, caractérisée par le fait que les surfaces (17, 31, 34a) sont situées dans un plan.

4. Pièce à main suivant la revendication 3, caractérisée par le fait que les surfaces (17, 31, 34a) sont tangentes au boîtier de tête (7).

5. Pièce à main suivant l'une des revendications 1 à 4, caractérisée par le fait que, pour le positionnement des surfaces (17, 31, 34a) et par conséquent des parties (5, 6) de la pièce à main, qui doivent être reliées entre elles, un organe de guidage (29'), qui s'engage dans un évidement (28') de la partie de préhension (5) ou de la partie de tête (6), est disposé sur la surface supérieure du tube (18) de la partie de tête ou sur la face inférieure de l'extrémité de la partie de préhension.

6. Pièce à main suivant la revendication 5, caractérisée par le fait que l'organe de guidage est disposé sur l'extrémité située du côté de la partie de préhension et contient au moins l'une des extrémités (33) des conduits véhiculant des milieux.

7. Pièce à main suivant les revendications 1 à 6, caractérisée par le fait que dans la section de la partie de préhension (5), tournée vers l'extrémité inférieure du boîtier de tête, la surface (34a) est formée par une partie de support (32) dans laquelle débouchent les conduits (W, A, 15) véhiculant des milieux.

8. Pièce à main suivant la revendication 7, caractérisée par le fait que les conduits (W, A, 15) véhiculant les milieux débouchent dans la partie de support (32) par une extrémité dirigée sur la pointe de l'outil.

9. Pièce à main suivant la revendication 7, caractérisée par le fait que dans la partie de support (32), les conduits (W, A) véhiculant les milieux, que sont l'air et l'eau, se termine dans une tubulure centrale de raccordement (33), qui peut être insérée dans un canal (19) agencé de façon correspondante et sortant de la surface (17) de la partie de tête (6), et que la ou les extrémités (15a) du guide de lumière débouchent dans des flasques latéraux (34) de la partie de support (32), qui prolongent le contour extérieur de la partie en forme de col (9).

10. Pièce à main suivant la' revendication 9, caractérisée par le fait que le canal (19) situé dans le boîtier de tête (7) est disposé dans une partie saillante (20) du boîtier de tête, utilisée pour le centrage et le blocage en rotation.

11. Pièce à main suivant la revendication 9, caractérisée par le fait qu'à l'état accouplé, les faces frontales (34a) des flasques (34) disposés des deux côtés de la tubulure de raccordement (33) s'appliquent contre la surface (17) de la partie de tête (6) et forment, en cet endroit, une butée.

12. Pièce à main suivant la revendication 9, caractérisée par le fait que la surface frontale d'une douille de guidage (26) de la partie de préhension (5) forme une butée.

13. Pièce à main suivant l'une des revendications 9 à 12, caractérisée par le fait que dans les tubulures de raccordement (33) pénètrent deux conduits (A, W) véhiculant des milieux, qui débouchent dans des ouvertures (35, 36), qui sont disposées axialement l'une derrière l'autre, sont étanchéifiées l'une par rapport à l'autre et sont réunies, lorsque les parties (5, 6) de la pièce à main sont à l'état accouplé, à des canaux (38, 39) disposés dans la partie saillante (20) du boîtier de tête et reliés à nouveau à des ouvertures de sortie (41) ménagées dans la face inférieure du boîtier de tête (7).

14. Pièce à main suivant l'une des revendications 1 à 13, caractérisée par le fait que la surface située au-dessus de la partie de support (32) est formée par la surface frontale (31) d'un organe d'actionnement (10), qui possède une forme de ⊓, sert à déverrouiller le dispositif d'encliquetage (22 à 25) et est maintenu sur une douille de guidage (26) de la partie de préhension (5).

15. Pièce à main suivant la revendication 1, caractérisée par le fait que l'extrémité libre de la tubulure de raccordement (33) fait saillie axialement par rapport à la partie de support (32).

16. Pièce à main suivant la revendication 5, caractérisée par le fait que l'organe de guidage (29, 29') est formé par un ou plusieurs éléments élastiques (43, 44) produisant des forces élastiques agissant transversalement par rapport à la direction longitudinale de la rainure de guidage (28, 28').

17. Pièce à main suivant la revendication 16, caractérisée par le fait qu'il est prévu des ressorts en forme de lames (43, 44), qui sont disposés de chant et dont une extrémité est fixée dans un évidement (45) de la partie de tête (6) et dont les bords inférieurs longitudinaux sont insérés dans une rainure de guidage (46) du tube de guidage (18).

FIG 8

FIG 1

FIG 2

FIG 5

FIG 3

FIG 4

FIG 6

FIG 7